# FASCICULE DE BREVET EUROPEEN

(11) **EP 0 463 955 B1**
(45) Date de publication et mention de la délivrance du brevet: **21.09.1994**
(21) Numéro de dépôt: 91401705.8
(22) Date de dépôt: 25.06.1991
(51) Int. Cl.: F01D 5/30, F01D 5/06, F01D 11/00, F01D 11/02, F01D 5/08

(54) **Dispositif de fixation d'une couronne de révolution sur un disque de turbomachine**
Befestigung eines Kranzes an einem Turbinenlaufrad
Fixing a crown to a turbine wheel

(30) Priorité: 27.06.1990 FR 9008068
(43) Date de publication de la demande: 02.01.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Mouchel, Jacques Henri, F-75018 Paris (FR); Taillant, Jean-Claude Christian, F-77350-Le Mee sur Seine (FR)
(74) Mandataire: Berrou, Paul

(56) Documents cités:
- EP-A- 0 091 865
- EP-A- 0 214 876
- FR-A- 2 324 873
- US-A- 3 010 696
- US-A- 4 701 105

## Description

Dans le domaine des turbomachines, FR-A-2 466 610 représente déjà un dispositif de fixation d'une couronne de révolution sur un disque de turbomachine, constitué par un premier jeu de paires de pattes angulairement régulièrement espacées, solidaires, une patte de chaque paire de ce premier jeu, du disque, l'autre patte de ladite paire, de la couronne, et susceptibles de se chevaucher, de manière à permettre un montage à baïonnette de la couronne sur le disque.

Cette disposition est toutefois incomplète par le fait que, d'une part, ce montage à baïonnette, peut être suffisant pour maintenir en position la petite couronne de maintien des aubes de la turbomachine représentée dans le document précité, aurait une rigidité insuffisante s'il s'agissait du montage d'une couronne plus importante, d'autre part, aucun dispositif d'arrêt en rotation n'est prévu pour éviter un démontage, par rotation intempestive, de la couronne par rapport au disque. Enfin, le caractère massif des pièces représentées induit très probablement des dilatations inégales en service, difficiles à compenser et à maîtriser.

On a également proposé notamment par le US-A 3 010 696 un dispositif du genre ci-dessus comportant en outre un deuxième jeu de paires de pattes décalées radialement par rapport aux pattes du premier jeu. Un tel dispositif peut cependant présenter des difficultés de montage et de centrage par suite d'un manque de flexibilité.

L'invention a pour but de remédier aux inconvénients qui viennent d'être mentionnés, et, en ayant pour objet un dispositif de montage tel que précédemment défini, comportant un deuxième jeu de paires de pattes, qui sont décalées radialement par rapport aux pattes du premier jeu, les pattes des premier et deuxième jeux de paires de pattes ayant des positions angulaires conjuguées de manière à permettre le montage simultané des pattes de la couronne appartenant au premier et deuxième jeu avec les pattes correspondantes du disque appartenant auxdits premier et deuxième jeux.

Conformément à l'invention, le disque et la couronne comportent deux faces sensiblement cylindriques, coaxiales à l'axe du disque et susceptibles d'être disposées en regard, et au contact l'une de l'autre, afin d'assurer le centrage de la couronne sur le disque.

Les avantageuses dispositions suivantes sont, en outre, de préférence adoptées :
- la face cylindrique de l'une des deux pièces - couronne et disque - est supportée par une première paroi mince flexible solidaire de ladite pièce ;
- ladite première paroi mince est coaxiale à l'axe du disque ;
- l'un des premier et deuxième jeux de pattes est placé à proximité de ladite première paroi mince ;
- une deuxième paroi mince flexible, distincte de ladite première paroi mince, est partie intégrante de la couronne ;
- l'autre des premier et deuxième jeux de pattes est placé à proximité de ladite deuxième paroi mince ;
- le disque supporte des ailettes de la turbomachine, chaque ailette ayant une racine, dont une extrémité longitudinale s'étend dans l'intervalle compris entre deux pattes solidaires dudit disque et appartenant à l'un des deux dits jeux de pattes et est susceptible, lorsque la couronne est montée sur le disque et que les pattes de la couronne qui appartiennent audit jeu de pattes chevauchent effectivement dans le montage à baïonnette les pattes du disque, de s'étendre également entre deux pattes dudit jeu de pattes de ladite couronne.

Les avantages principaux d'un dispositif de fixation conforme à l'invention résident dans l'obtention d'une facilité satisfaisante de montage et de démontage, dans une réduction du nombre de pièces nécessaires au montage et donc également dans une réduction du poids de l'ensemble, dans le maintien de l'assemblage sans jeu de la couronne et du disque, et enfin, dans l'obtention d'un certain amortissement des vibrations.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est une coupe axiale partielle représentant un dispositif de fixation conforme à l'invention dans la configuration dans laquelle la couronne est effectivement montée sur le disque de la turbomachine, coupe selon I-I de la figure 2 ;
- la figure 2 est une coupe suivant II-II de la figure 1 ;
- la figure 3 est une coupe analogue à celle de la figure 2, mais dans la configuration avant montage, la couronne étant présentée devant le disque en vue dudit montage ;
- la figure 4 est une coupe suivant IV-IV de la figure 2.

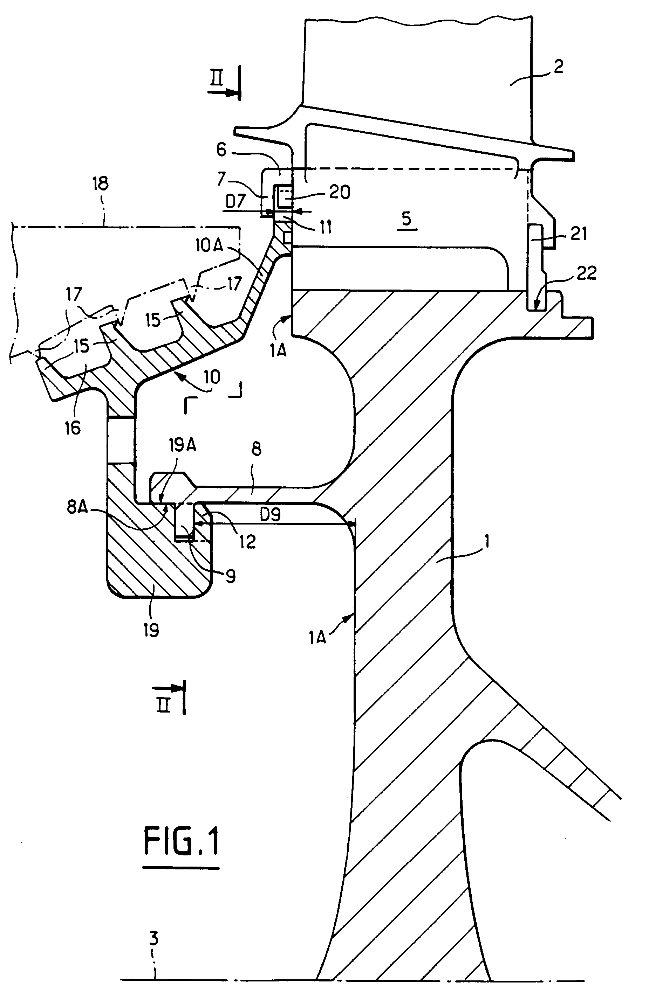

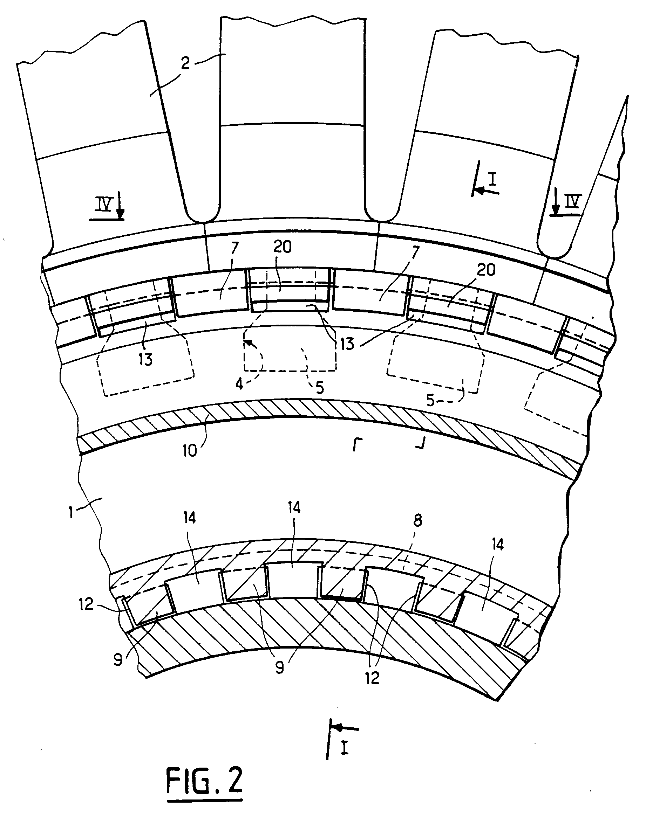

La figure 1 représente le disque 1, massif, d'un turboréacteur, disque supportant des aubes 2 et monté rotatif par rapport à un bâti (non représenté) autour de l'axe géométrique 3. Comme représenté sur la figure 2, le disque 1, qui est constitué par un flasque s'étendant généralement perpendiculairement à l'axe 3, a sa périphérie munie de logements 4, conformés en queues-d'aronde, aptes à recevoir les racines 5 des aubes 2.

Le disque 1 comporte, d'une part, un anneau de révolution 6, solidaire de l'une de ses faces transversales 1A et situé près de la périphérie du disque, cet anneau étant muni d'une première série de pattes 7 rabattues sensiblement parallèlement à la face 1A, en en étant cependant écartées d'une distance D7, et en étant en outre régulièrement espacées, d'autre part, décalée radialement vers l'axe 3, par rapport aux pattes 7, une paroi mince flexible 8, cylindrique, coaxiale à l'axe 3, souple radialement, qui constitue le support d'une deuxième série de pattes 9, également sensiblement parallèles à la face 11, en en étant écartées d'une distance D9 et en étant régulièrement espacées, correspondant en fait aux pattes 7 de la première série, en étant situées dans les mêmes plans radiaux que ces pattes 7 de la première série.

L'extrémité 8A de la face axiale de plus petit diamètre délimitant la paroi mince 8 est usinée sous la forme d'une portée cylindrique d'axe 3.

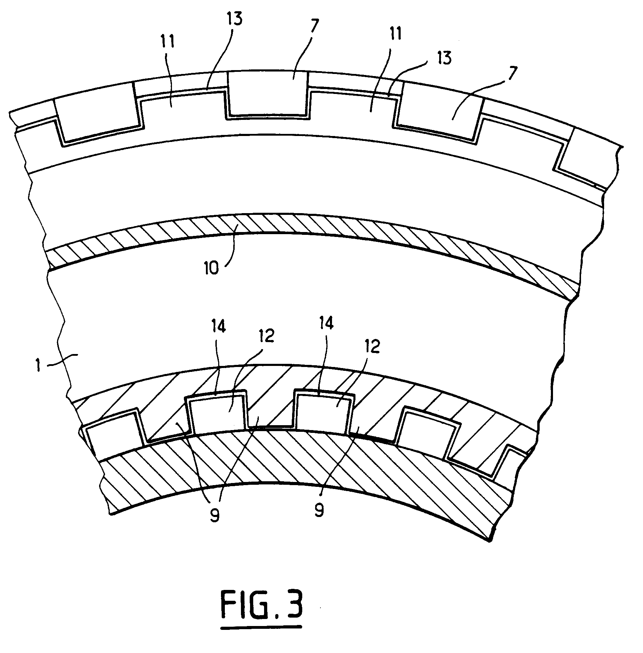

Une couronne de révolution 10 supporte elle-même une première série de pattes 11 et une deuxième série de pattes 12, qui s'étendent toutes sensiblement parallèlement à la face 1A du disque 1, en étant, les pattes 11,12 de chaque série, espacées angulairement de manière régulière et en correspondance des pattes 7,9 des première et deuxième séries de pattes solidaires du disque 1, de manière, les pattes 11,12, d'une part (figure 3), à être présentées en regard des intervalles 13,14 séparant deux pattes 7, ou deux pattes 9 successives, d'autre part (figure 2), après introductions simultanées dans lesdits intervalles, dépassement desdites pattes 7,9, et rotation de la couronne 10, à être placées (les pattes 11,12) derrière ces pattes 7,9 solidaires du disque 1, et à réaliser ainsi un montage du type "à baïonnette" de la couronne 10 sur le disque 1.

On note que, dans la réalisation représentée, la couronne 10, de révolution d'axe 3, supporte en outre des premières langues d'étanchéité 15 d'un joint à labyrinthes 16, des deuxièmes langues d'étanchéité 17, solidaires du carter 18 du turboréacteur étant disposées en regard des premières langues d'étanchéité 15 et complétant ainsi le joint à labyrinthes 16.

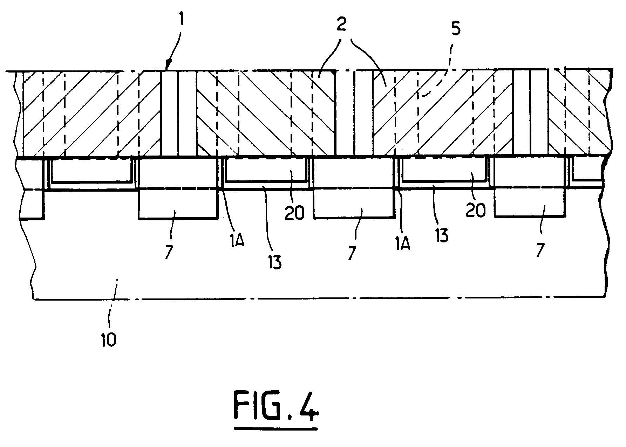

Il convient d'observer également, les dispositions suivantes :
- la couronne de révolution 10 possède une extrémité massive 19, qui, d'une part, supporte les pattes 12 de la deuxième série de pattes, d'autre part, comporte une face cylindrique 19A, d'axe 3, qui constitue une portée de centrage de ladite couronne 10 par rapport au disque 1, portée de centrage qui coopère avec la portée 8A de la paroi mince 8 pour réaliser ledit centrage ;
- la couronne de révolution 10 comporte par ailleurs une deuxième paroi mince flexible 10A, située à proximité des pattes 11, et donc écartée des autres pattes 12 de ladite couronne de révolution, paroi 10A sensiblement tronconique, souple axialement ;
- la racine 5 de chaque aube 2 est munie, du côté qui, après montage de l'aube 2 sur le disque 1, est voisin de la face 1A du disque 1, d'un appendice 20, qui, une fois ledit montage réalisé (figures 1,2 et 4), dépasse le plan de la face 1A, et est disposé dans l'intervalle 13 séparant deux pattes 7 successives, et sépare deux pattes 14 successives, après qu'ait été réalisé le montage à baïonnette de la couronne 10 sur le disque 1 ;
- du côté du disque 1, opposé à la face 1A, les aubes 2 sont maintenues en place par maintien de leurs racines 5 dans les logements correspondants 4 du disque 1, au moyen d'une bague 21 d'arrêt axial introduite dans une gorge 22 du disque 1.

Les dispositions, qui viennent d'être décrites, présentent les avantages suivants :
- facilité du montage (et du démontage) de la couronne 10 sur le disque 1, au moyen d'un simple montage à baïonnette (pattes 7-11 ; et 9-12, simultané pour les deux jeux de paires de pattes, et arrêt en rotation au moyen des divers appendices 20 au cours du seul montage traditionnel des racines 5 des aubes 2 dans leurs logements 4 ;
- réalisation d'un montage résistant, en mettant en oeuvre des premiers jeux de paires de pattes 7-11, et, des deuxièmes jeux de paires de pattes 9-12, procurant un maintien satisfaisant de la couronne 10 sur le disque 1 ;
- réalisation d'un bon centrage de la couronne 10 par rapport à l'axe 3, au moyen des portées précises de centrage 8A et 19A ;
- réalisation cependant d'un montage permettant sans contraintes excessives, et par conséquent sans devoir prévoir des épaisseurs excessives de matériau, la reprise de dilatations éventuellement différentes du disque 1 et de la couronne 10, ceci étant permis dans le sens radial, par la première paroi mince flexible 8, et, dans le sens axial, par la deuxième paroi mince flexible 10A, les faibles épaisseurs desdites première et deuxième parois minces permettant une certaine déformation dans chacun des sens correspondants ;
- également, obtention d'un bon maintien axial et radial des deux pièces dans le domaine de fonctionnement, grâce aux déformations des parties flexibles ;
- enfin, amortissement et filtration de certaines vibrations, par l'intermédiaire de mini frottements entre pièces (couronne 10 et disque 1) non rigidement liées.

Finalement, l'ensemble décrit possède un nombre de constituants réduits, qui lui procure une légèreté inconnue avant l'invention.

Celle-ci n'est pas limitée à la réalisation décrite, mais en couvre au contraire toutes les variantes qui pourraient lui être apportées sans sortir de son cadre.

## Revendications

1. Dispositif de fixation d'une couronne de révolution (10) sur un disque (1) de turbomachine, constitué, d'une part, par un premier jeu de paires de pattes (7-11) angulairement régulièrement espacées, solidaires, une patte (7) de chaque paire de ce premier jeu, du disque (1), l'autre patte (11) de ladite paire, de la couronne (10), et susceptibles de se chevaucher, de manière à permettre un montage à baïonnette de la couronne sur le disque, et, d'autre part, d'un deuxième jeu de paires de pattes (9-12), qui sont décalées radialement par rapport aux pattes (7-11) du premier jeu, les pattes des premier et deuxième jeux de paires de pattes ayant des positions angulaires conjuguées de manière à permettre le montage simultané des pattes (11,12) de la couronne (10) appartenant au premier et au deuxième jeu avec les pattes (7,9) correspondantes du disque (1) appartenant auxdits premier et deuxième jeux, caractérisé en ce que :
le disque (1) et la couronne (10) comportent deux faces (8A,19A) sensiblement cylindriques, coaxiales à l'axe (3) du disque et susceptibles d'être disposées en regard, et au contact l'une de l'autre, afin d'assurer le centrage de la couronne sur le disque, la face cylindrique (8A) de l'une (1) des deux pièces - couronne et disque - étant supportée par une première paroi mince flexible (8) solidaire de ladite pièce (1) et est coaxiale à l'axe (3) du disque (1).

2. Dispositif de fixation selon la revendication 1 caractérisé en ce que l'un (9-12) des premier et deuxième jeux de pattes est placé à proximité de ladite première paroi mince (8).

3. Dispositif de fixation selon l'une quelconque des revendications 1 ou 2 caractérisé en ce qu'une deuxième paroi mince flexible (10A), distincte de ladite première paroi mince (8), est partie intégrante de la couronne (10).

4. Dispositif de fixation selon la revendication 3 caractérisé en ce que l'autre (7-11) des premier et deuxième jeux de pattes est placé à proximité de ladite deuxième paroi mince (10A).

5. Dispositif de fixation selon l'une quelconque des revendications 1 à 4, caractérisé en ce que le disque (1) supporte des ailettes (2) de la turbomachine, chaque ailette ayant une racine (5), dont une extrémité longitudinale (20) s'étend dans l'intervalle (13) compris entre deux pattes (7) solidaires dudit disque (1) et appartenant à l'un (7-11) des deux dits jeux de pattes et est susceptible, lorsque la couronne (10) est montée sur le disque (1) et que les pattes (11) de la couronne (10) qui appartiennent audit jeu de pattes (7-11) chevauchent effectivement dans le montage à baïonnette les pattes (7) du disque (1), de s'étendre également entre deux pattes (11) dudit jeu de pattes de ladite couronne (10).

## Claims

1. Device for fixing a rotating ring (10) on a turbine engine rotor (1), consisting, on the one hand, of a first set of pairs of lugs (7-11) which are spaced at regular angular intervals, one lug (7) of each pair of this first set being integral with the rotor (1), and the other lug (11) of the said pair being integral with the ring (10), the said lugs being capable of overlapping so as to permit a bayonet mounting of the ring on the rotor, and, on the other hand, of a second set of pairs of lugs (9-12) which are offset radially relative to the lugs (7-11) of the first set, the lugs of the first and second sets of pairs of lugs having adjacent angular positions so as to enable the lugs (11,12) of the ring (10) which belong to the first and second set to be mounted simultaneously with the corresponding lugs (7,9) of the rotor (1) which belong to the said first and second sets, characterized in that :
the rotor (1) and the ring (10) comprise two substantially cylindrical faces (8A,19A) which are coaxial with the axis (3) of the rotor and are capable of being arranged opposite each other and in contact with each other in order to centre the ring on the rotor, the cylindrical face (8A) of one (1) of the two parts - ring and rotor - being supported by a first thin flexible wall (8) integral with the said part (1) and coaxial with the axis (3) of the rotor (1).

2. Fixing device according to Claim 1, characterized in that one (9-12) of the first and second sets of lugs is placed in proximity to the said first thin wall (8).

3. Fixing device according to either of Claims 1 and 2, characterized in that a second thin flexible wall (10A) separate from the said first thin wall (8), is an integral part of the ring (10).

4. Fixing device according to Claim 3, characterized in that the other (7-11) of the first and second sets of lugs is placed in proximity to the said second thin wall (10A).

5. Fixing device according to any one of Claims 1 to 4, characterized in that the rotor (1) supports blades (2) of the turbine engine, each blade having a root (5), one longitudinal end (20) of which extends into the space (13) between two lugs (7) integral with the said rotor (1) and belonging to one (7-11) of the two said sets of lugs, and is capable, when the ring (10) is mounted on the rotor (1) and when the lugs (11) of the ring (10) belonging to the said set of lugs (7-11) effectively overlap the lugs (7) of the rotor (1) to form a bayonet mounting, of also extending between two lugs (11) of the said set of lugs of the said ring (10).

## Patentansprüche

1. Vorrichtung zur Befestigung eines Drehkranzes (10) auf einem Turbomaschinenrotor (1), bestehend zum einen aus einer ersten Gruppe von formschlüssigen Eingriffselementpaaren (Klauenpaaren) (7,11), die in gleichmäßigen Winkelabständen voneinander angeordnet sind, nämlich von jedem Paar dieser ersten Gruppe eine Klaue (7) des Rotors (1) und die andere Klaue (11) des Paares des Kranzes (10), die so ineinander in Eingriff bringbar sind, daß der Kranz bajonettartig auf dem Rotor anbringbar ist, und zum anderen aus einer zweiten Gruppe von Klauenpaaren (9, 12), die von den anderen Klauen (7,11) der ersten Gruppe radial versetzt sind, wobei die Klauen der ersten und zweiten Gruppe von Klauenpaaren zugeordnete Winkelpositionen haben, derart, daß Klauen (11,12) des Kranzes (10), die zu der ersten und zweiten Gruppe gehören, gemeinsam mit den Klauen (7,9) des Rotort (1), die zu der ersten und zweiten Gruppe gehören, anbringbar sind,
dadurch **gekennzeichnet**,
daß der Rotor (1) und der Kranz (10) zwei im wesentlichen zylindrische Flächen (8A, 19A) aufweisen, die koaxial zur Achse (3) des Rotors und gegenüber liegend miteinander in Kontakt anbringbar sind, um die Zentrierung des Kranzes auf dem Rotor zu gewährleisten, wobei die zylindrische Fläche (8A) von einem (1) der beiden Elemente Kranz und Rotor durch ein erstes dünnes flexibles Wandelement (8) gehalten ist, das formschlüssig mit dem Element (1) und koaxial zu der Achse (3) des Rotors (1) ist.

2. Befestigungsvorrichtung nach Anspruch 1,
dadurch **gekennzeichnet,**
daß eine (9,12) der ersten und zweiten Gruppe von Klauen in der Nähe des ersten dünnen Wandelements (8) angebracht ist.

3. Befestigungsvorrichtung nach einem der Ansprüche 1 oder 2,
dadurch **gekennzeichnet,**
daß ein zweites flexibles dünnes Wandelement (10A), das unterschiedlich von dem ersten dünnen Wandelement (8) ist, einstückig mit dem Kranz (10) ist.

4. Befestigungsvorrichtung nach Anspruch 3,
dadurch **gekennzeichnet,**
daß die andere (7,11) der ersten und zweiten Gruppe von Klauen in der Nähe des zweiten dünnen Wandelements (10A) angebracht ist.

5. Befestigungsvorrichtung nach einem der Ansprüche 1 bis 4,
dadurch **gekennzeichnet,**
daß der Rotor (1) Schaufeln (2) der Turbomaschine trägt, wobei jede Schaufel eine Verankerung (5) aufweist, deren in Längsrichtung eines Ende (20) sich in einem Abschnitt (13) zwischen zwei Klauen (7) erstreckt, die formschlüssig mit dem Rotor (1) sind und zu einer (7,11) der beiden Gruppen von Klauen gehören, und sich ebenso zwischen zwei Klauen (11) der Anzahl von Klauen des Kranzes (10) erstrecken kann, da der Klanz (10) auf dem Rotor (1) angebracht ist und die Klauen (11) des Kranzes (10), die zu der Gruppe von Klauen (7,11) gehören, bei der bajonettartigen Anbringung wirksam in die Klauen (7) des Rotors (1) eingreifen.
